# EUROPÄISCHE PATENTANMELDUNG

(11) **EP 1 348 339 A2**
(43) Veröffentlichungstag der Anmeldung: **01.10.2003**
(21) Anmeldenummer: 02019497.3
(22) Anmeldetag: 31.08.2002
(51) Int. Cl.: A22C 25/06

(54) **Arbeitsfläche zur Bearbeitung von Lebensmitteln**

(30) Priorität: 27.03.2002 DE 20204946 U; 17.05.2002 DE 20207749 U
(71) Anmelder: Diers, Wilfried F., 26135 Oldenburg (DE)
(72) Erfinder: Diers, Wilfried F., 26135 Oldenburg (DE)
(74) Vertreter: Jabbusch, Wolfgang, Dipl.-Ing. Dr.jur.

(57) **Zusammenfassung**

Die Erfindung betrifft eine Arbeitsfläche zur Bearbeitung von Lebensmitteln, insbesondere zur Bearbeitung von Lebensmitteln tierischer Herkunft, vorzugsweise zum Schneiden, Trennen, Hacken oder sonstigem Zerteilen von Fleisch oder Fisch, bei der wenigstens ein Teil der Arbeitsfläche als gekühlte Fläche ausgebildet ist.

## Beschreibung

Die Erfindung betrifft eine Arbeitsfläche zur Bearbeitung von Lebensmitteln, insbesondere zur Bearbeitung von Lebensmitteln tierischer Herkunft, vorzugsweise zum Schneiden, Trennen, Hacken und sonstigen Zerteilen von Fleisch oder Fisch.

Lebensmittel tierischer Herkunft werden zur Zeit üblicherweise auf Arbeitsplatten bearbeitet, insbesondere zerteilt, die aus Kunststoff hergestellt sind. Diese Arbeitsplatten haben den Vorteil, daß sie relativ gut abwaschbar sind. Sie haben aber den Nachteil, daß die für die Bearbeitung notwendigen Werkzeuge, zum Beispiel Messer und Beile, schnell stumpf werden, wenn sie mit der Arbeitsfläche in Berührung kommen. Außerdem ist eine hygienische einwandfreie Bearbeitung auch mit den abwaschbaren Arbeitsplatten nicht gewährleistet, insbesondere, wenn es sich um leicht verderbliche Lebensmittel handelt, die bearbeitet werden. Dies betrifft unter Umständen auch Gemüse oder dergleichen.

Der Erfindung liegt die Aufgabe zugrunde, eine Arbeitsfläche der eingangs genannten Gattung aufzuzeigen, auf der eine schonende und hygienische Bearbeitung möglich ist.

Diese Aufgabe ist erfindungsgemäß mit einer Arbeitsplatte mit den Merkmalen des Schutzanspruchs 1 gelöst. Vorteilhafte Weiterbildungen der Erfindung sind in den Unteransprüchen angegeben.

Die Arbeitsplatte zeichnet sich dadurch aus, daß wenigstens ein Teil der Arbeitsfläche als gekühlte Fläche ausgebildet ist.

Die erfindungsgemäß gekühlte Fläche kann bevorzugt aus einem schnittfesten Kunststoff, lebensmittelverträglichen Metall, vorzugsweise Edelstahl, aus Holz, vorzugsweise Hartholz, oder aus Keramikmaterial gefertigt sein. Die Hygiene bei der Bearbeitung wird dadurch wesentlich verbessert, daß die gekühlte Fläche beispielsweise im Bereich des Gefrierpunktes gehalten wird. So können insbesondere die bei Kühlschränken oder auch bei Gefrierschränken üblichen Temperaturen von beispielsweise +5°C bis -5°C angestrebt werden.

Nach einer Weiterbildung der Erfindung ist die gekühlte Fläche in einer wannenartigen Vertiefung angeordnet, die soweit mit Kühlwasser oder einer sonstigen für Lebensmittel unbedenklichen Kühlflüssigkeit füllbar ist, daß die gekühlte Fläche mit Kühlwasser durchtränkt und/oder an ihrer Arbeitsoberfläche vernäßt ist. Bei dieser Ausführung ist bei der Bearbeitung, auch im Bereich der Arbeitsfläche selbst, Kühlwasser oder eine andere Kühlflüssigkeit anwesend, die letztlich die Kälte an die zu bearbeitenden Lebensmittel abgibt.

Gemäß einer anderen Weiterbildung der Erfindung ist die gekühlte Fläche in der wannenartigen Vertiefung im Kühlwasser untergetaucht angeordnet und das Kühlwasser zu Eis gefroren, das die gekühlte Fläche als Arbeitsflächenauflage überdeckt. Bei dieser Weiterbildung bildet die gekühlte Fläche quasi einen Bearbeitungskern, der von einer mehr oder minder dicken Eisschicht umhüllt ist. Eine solche Ausführung hat besondere Vorteile, da zum Reinigen der Arbeitsfläche die darüber befindliche Eisschicht mit den gegebenenfalls vorhandenen Lebensmittelrückständen lediglich abgeschabt werden muß. Die darunter befindliche gekühlte Fläche ist somit bloßgelegt und für eine neue Überfrierung bereitgestellt.

Vor einer Benutzung der Arbeitsfläche ist es erforderlich, die gekühlte Fläche über ca. 20 bis 30 Minuten vorzukühlen, bis eine vorbestimmte Temperatur erreicht ist. Es ist besonders zweckmäßig, wenn der wannenartigen Vertiefung und/oder der gekühlten Fläche ein Temperaturfühler eines Temperaturmeßgerätes zugeordnet ist. Auf diese Weise ist eine Einrichtung geschaffen, mit der kontrollierbar ist, ob die gekühlte Fläche eine in einem gewünschten Bereich liegende Temperatur aufweist, bzw. wie weit die aktuelle Temperatur von einer gewünschten Temperatur abweicht. Es ist außerdem vorgesehen, daß das Temperaturmeßgerät mit einem Thermostat zu einem Temperaturregelgerät erweitert ist.

Nach einer besonders vorteilhaften Weiterbildung der Erfindung ist der wannenartigen Vertiefung und/oder der gekühlten Fläche ein einen Verunreinigungsgrad anzeigendes Keimmeßgerät zugeordnet. Mit dem Verunreinigungsgrad ist insbesondere eine Konzentration bzw. eine bestimmten Dichte von Mikroorganismen gemeint. Das Keimmeßgerät ist jedoch maßgeblich zur Erkennung bzw. Detektion ganz bestimmter typischer Erreger bzw. Bakterien ausgelegt, deren Auftreten bzw. deren Konzentration Rückschlüsse auf den gesamten Verunreinigungsgrad der Arbeitsfläche zulassen. Weiterhin ist es denkbar, daß das Keimmeßgerät eine Warneinrichtung, beispielsweise in Form einer Warnleuchte oder eines Warntonerzeugers aufweist, mit der ein Überschreiten eines bestimmten Verunreinigungsgrades deutlich signalisierbar ist. Ist ein zulässiger Verunreinigungsgrad überschritten, muß die Arbeitsfläche gereinigt werden. Dazu ist es erforderlich, die gekühlte Fläche abzutauen. Um den zeitintensiven Abtauvorgang zu beschleunigen, sind die gekühlte Fläche und die wannenartige Vertiefung im Einflußbereich einer Abtauvorrichtung angeordnet. Reinigungsbedingte Arbeitsausfallzeiten an der Arbeitsfläche werden somit deutlich verkürzt.

Um eine Kühlung, insbesondere eine automatisierte Kühlung, zu erreichen, ist nach einer Weiterbildung der Erfindung vorgesehen, daß die gekühlte Fläche im Einflußbereich eines Wärmetauschers angeordnet ist, der mit einem Kühlaggregat in Verbindung steht. Dabei kann der Wärmetauscher als eine von flüssigem Kühlmittel durchflossene Kühlschlange ausgebildet sein, die mit dem Kühlaggregat kühlmittelleitend verbunden ist. Auf diese Weise ist eine elektrotechnische Kühlung geschaffen.

Eine andere Weiterbildung der Erfindung sieht vor, daß ein erster Teil der Arbeitsfläche als gekühlte Fläche und ein zweiter daneben angeordneter Teil als nicht gekühlte zusätzliche Fläche ausgebildet ist. Insbesondere bei großen gekühlten Flächen kann es von Vorteil sein, wenn die gekühlten Flächen aus mehreren miteinander kombinierten Arbeitsflächenabschnitten zusammengesetzt sind, die auf unterschiedliche Temperaturen herunter kühlbar sind. Eine an die auf den jeweiligen Arbeitsflächenabschnitten zu verrichtende Arbeit angepaßte Temperatur führt zu vorteilhaften Energieeinsparungen.

Das Kühlaggregat ist vorzugsweise an einem die Arbeitsfläche tragenden Tischgestell angeordnet. Es ist vorgesehen, daß eine derart kombinierte Arbeitsfläche in einem Rahmen eines Einzelgerätes oder auch eines Einbaugerätes bereitgestellt wird, das als entsprechendes Gesamtgerät zum Beispiel in einer privaten oder gewerblichen Küche seinen Platz finden kann. Es ist auch möglich, bereits vorhandene Arbeitstische, Arbeitstheken oder dergleichen in erfindungsgemäßer Weise umzurüsten.

Zur Einstellung einer bequemen Arbeitshöhe ist die Arbeitsfläche höhenverstellbar ausgebildet. Der Wärmetauscher ist vorzugsweise an der höhenverstellbaren Arbeitsfläche angeordnet, so daß die Verbindung zwischen dem Wärmetauscher und dem an dem Tischgestell angeordneten Kühlaggregat entsprechend flexibel ausgebildet sein muß. Die flexible Verbindung besteht beispielsweise aus Schläuchen, wodurch das Kühlaggregat mechanisch von der gekühlten Fläche entkoppelt ist. Somit ist beispielsweise vermieden, daß Zerteilungsschläge, insbesondere zum Zerteilen von Fleisch, die auf die gekühlte Fläche ausgeübt werden, unmittelbar auch das Kühlaggregat erschüttern.

Die erfindungsgemäße Arbeitsfläche ist auf wenigstens einem schlagdämpfenden bzw. stoßdämpfenden Dämpfungsorgan gelagert, wobei derartige Dämpfungsorgane beispielsweise zwischen der Arbeitsfläche und dem Kühlaggregat und/oder bodennah als Federbeine oder Federfüße oder dergleichen ausgebildet sein können.

Die gekühlte Fläche kann in ein Umfeld integriert sein, das wenigstens einen weiteren Arbeitsbereich zur Verfügung stellt, beispielsweise indem die gekühlte Fläche mehr oder weniger bündig in eine größere Arbeitsfläche eingelegt ist. Die Kühlung kann sich auch in den an die gekühlte Fläche angrenzenden Arbeitsbereich erstrecken, so daß beispielsweise bereits bearbeitete Lebensmittel, weiterhin gekühlt, aus dem Bereich der gekühlten Fläche herausgeschoben und zwischengelagert werden können.

Die weiteren Arbeitsbereiche, sowie die Vorrichtung insgesamt, in die die gekühlte Fläche integriert ist, sollten aus einem lebensmittelverträglichen Material hergestellt sein. Vorzugsweise kann Edelstahl verwendet werden.

Das Kühlwasser kann mit Ozon oder einem anderen keimfrei machenden Zusatz angereichert sein.

Ein Ausführungsbeispiel der Erfindung ist in den Zeichnungen dargestellt. Es zeigen:
- Fig. 1:: eine perspektivische Ansicht einer erfindungsgemäßen Arbeitsfläche;
und
- Fig. 2:: eine schematische Seitenansicht der Arbeitsfläche im Schnitt.

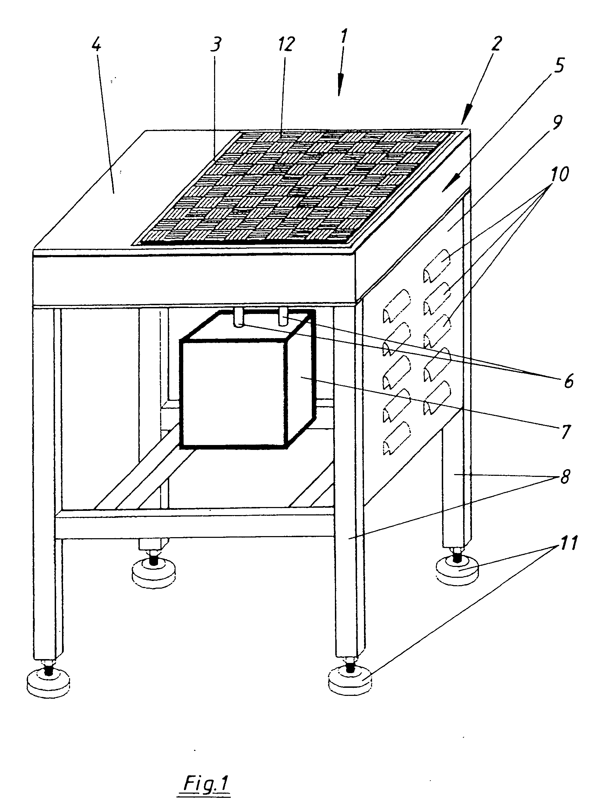

Fig. 1 zeigt eine perspektivische Ansicht einer erfindungsgemäßen Arbeitsfläche, die über zwei Arbeitsflächenbereiche verfügt. Eine einen ersten Arbeitsflächenbereich bildende gekühlte Fläche 1 ist in eine wannenartige Vertiefung 2 eingelegt, die mit Kühlwasser 3 gefüllt ist. Neben der gekühlten Fläche 1 ist eine den zweiten Arbeitsflächenbereich bildende zusätzliche Fläche 4 angeordnet, die als Edelstahlblech gebildet ist.

Unterhalb der gekühlten Fläche 1, die den ersten Arbeitsflächenbereich bildet, ist ein Wärmetauscher 5 angeordnet, mit dem das in der wannenartigen Vertiefung 2 enthaltene Kühlwasser 3 und somit auch die gekühlte Fläche 1 gekühlt werden. Dieser Wärmetauscher 5 ist über eine Kühlmittelleitungen aufweisende Verbindung 6 mit einem Kühlaggregat 7 verbunden, das ebenfalls unterhalb der gekühlten Fläche 1 angeordnet ist. Der Wärmetauscher 5 ist als Kühlschlange ausgebildet.

Die gekühlte Fläche 1 und die zusätzliche Fläche 4 werden von einem Tischgestell 8 getragen, das weitgehend aus Edelstahl ausgebildet ist. Eine Wandung 9 des Tischgestells 8 weist kiemenartig ausgeführte Lüftungsschlitze 10 auf. Die Arbeitsfläche ist als Einzelgerät oder auch als Einbaugerät ausgeführt.

Das Tischgestell 8 steht auf als Federbeine ausgebildeten Dämpfungsorganen 11, die zur Höhenverstellung und zur Stoßdämpfung für die Arbeitsfläche dienen, so daß auf die Arbeitsfläche auftreffende Schläge gedämpft werden.

Mit Hilfe des Kühlaggregates 7 wird das Kühlwasser 3 durch den Wärmetauscher 5 geleitet, der das Kühlwasser 3 in der wannenartigen Vertiefung 2 abkühlt, beispielsweise auf Temperaturen, die etwa um den Gefrierpunkt liegen. Das Kühlwasser 3 umnetzt die gesamte gekühlte Fläche 1, insbesondere deren arbeitsseitige Oberfläche 12. Über das Kühlwasser 3 wird somit auch das Lebensmittel gekühlt, das auf der gekühlten Fläche 1 bearbeitet wird. Auch wenn das Kühlaggregat zwischen zeitlich länger auseinanderliegenden Bearbeitungsvorgängen ausgestellt war, ist die mit der erfindungsgemäßen Arbeitsfläche angestrebte Kühltemperatur spätestens nach 20 bis 30 Minuten andauernden Vorkühlzeit erreicht.

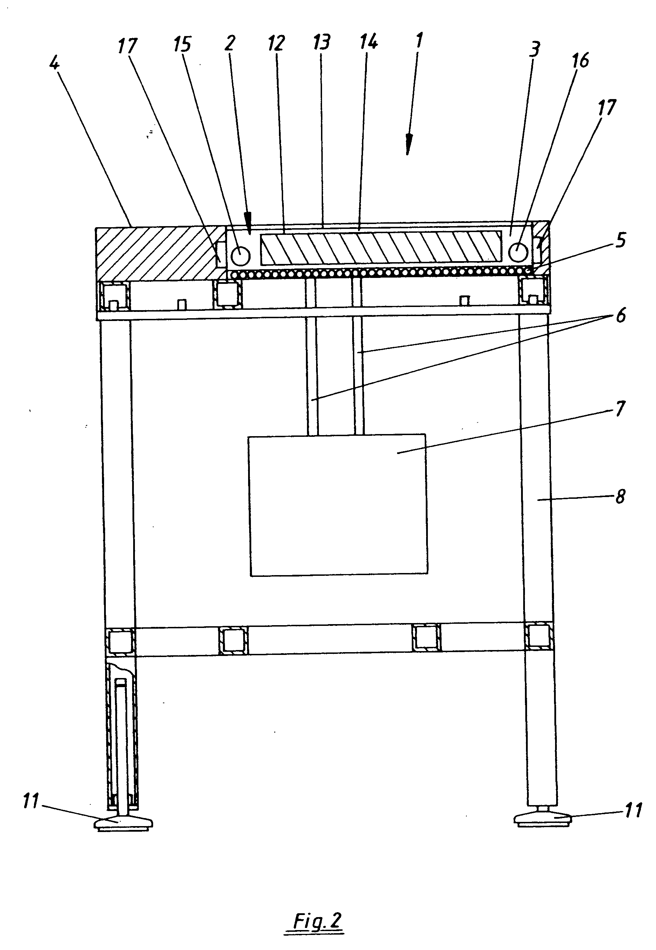

Fig. 2 zeigt eine schematische Seitenansicht der Arbeitsfläche im Schnitt, aus der erkennbar ist, daß die wannenartige Vertiefung 2 mit Kühlwasser 3 gefüllt ist. Mit der Höhe des Kühlwasserstandes 13 ist gewährleistet, daß die arbeitsseitige Oberfläche 12 der gekühlten Fläche 1 mit Kühlwasser 3 bedeckt ist. Mit dem Kühlaggregat 7 ist das Kühlwasser 3 zu Eis gefrierbar, das die gekühlte Fläche 1 auf ihrer arbeitsseitigen Oberfläche 12 als Arbeitsflächenauflage 14 überdeckt.

Um die Temperatur des Kühlwassers 3 oder des zu Eis gefrorenen Kühlwassers 3 zu messen, ist in der wannenartigen Vertiefung 2 ein Temperaturfühler 15 angeordnet. Außerdem ist der gekühlten Fläche 1 ein Keimmeßgerät 16 zugeordnet, das die Konzentration von Mikroorganismen, insbesondere von Bakterien, messen kann.

Eine Abtauvorrichtung 17 beschleunigt ein Auswechseln von verunreinigtem Kühlwasser 3 bzw. Eis und ist mit Vorteil im Seitenwandungsbereich der wannenartigen Vertiefung 2 angeordnet. Der unterhalb der gekühlten Fläche 1 angeordnete Wärmetauscher 5 ist als eine von flüssigem Kühlmittel durchflossene Kühlschlange ausgebildet, die mit dem Kühlaggregat 7 über die Verbindung 6 kühlmittelleitend verbunden ist. Der Wärmetauscher 5 ist direkt am Boden der wannenartigen Vertiefung 2 angeordnet. Gleiche Bauteile sind mit gleichen Bezugszahlen versehen.

## Patentansprüche

1. Arbeitsfläche zur Bearbeitung von Lebensmitteln, insbesondere zur Bearbeitung von Lebensmitteln tierischer Herkunft, vorzugsweise zum Schneiden, Trennen, Hacken oder sonstigem Zerteilen von Fleisch oder Fisch,
**dadurch gekennzeichnet,**
**daß** wenigstens ein Teil der Arbeitsfläche als gekühlte Fläche (1) ausgebildet ist.

2. Arbeitsfläche nach Anspruch 1, **dadurch gekennzeichnet, daß** die gekühlte Fläche (1) in einer wannenartigen Vertiefung (2) angeordnet ist, die soweit mit Kühlwasser (3) oder einer sonstigen für Lebensmittel unbedenklichen Flüssigkeit füllbar ist, daß die gekühlte Fläche (1) mit Kühlwasser (3) durchtränkt und/oder an ihrer arbeitsseitigen Oberfläche (12) vernäßt ist.

3. Arbeitsfläche nach Anspruch 2, **dadurch gekennzeichnet, daß** die gekühlte Fläche (1) in der wannenartigen Vertiefung (2) im Kühlwasser (3) untergetaucht angeordnet und das Kühlwasser (3) zu Eis gefroren ist, das die gekühlte Fläche (1) als Arbeitsflächenauflage (14) überdeckt.

4. Arbeitsfläche nach einem der Ansprüche 2 und 3, **dadurch gekennzeichnet, daß** der wannenartigen Vertiefung (2) und/oder der gekühlten Fläche (1) ein Temperaturfühler (15) eines Temperaturmeßgerätes zugeordnet ist.

5. Arbeitsfläche nach einem der Ansprüche 2 bis 4, **dadurch gekennzeichnet, daß** der wannenartigen Vertiefung (2) und/oder der gekühlten Fläche (1) ein einen Verunreinigungsgrad anzeigendes Keimmeßgerät (16) zugeordnet ist.

6. Arbeitsfläche nach einem der Ansprüche 1 bis 5, **dadurch gekennzeichnet, daß** die gekühlte Fläche (1) und die wannenartige Vertiefung (2) im Einflußbereich einer Abtauvorrichtung (17) angeordnet sind.

7. Arbeitsfläche nach einem der Ansprüche 1 bis 6, **dadurch gekennzeichnet, daß** die gekühlte Fläche (1) im Einflußbereich eines Wärmetauschers (5) angeordnet ist, der mit einem Kühlaggregat (7) in Verbindung (6) steht.

8. Arbeitsfläche nach Anspruch 7, **dadurch gekennzeichnet, daß** der Wäremtauscher (5) als eine von flüssigem Kühlmittel durchflossene Kühlschlange ausgebildet ist, die mit dem Kühlaggregat (7) kühlmittelleitend verbunden ist.

9. Arbeitsfläche nach. einem der Ansprüche 1 bis 8, **dadurch gekennzeichnet, daß** ein erster Teil der Arbeitsfläche als gekühlte Fläche (1) und ein zweiter daneben angeordneter Teil als nicht gekühlte zusätzliche Fläche (4) ausgebildet ist.

10. Arbeitsfläche nach einer der Ansprüche 1 bis 9, **dadurch gekennzeichnet, daß** die gekühlte Fläche (1) nebeneinander angeordnete auf unterschiedliche Temperaturgrade gekühlte Arbeitsflächenabschnitte aufweist.

11. Arbeitsfläche nach einem der Ansprüche 7 bis 10, **dadurch gekennzeichnet, daß** das Kühlaggregat (7) an einem die Arbeitsfläche tragenden Tischgestell (8) angeordnet ist.

12. Arbeitsfläche nach einem der Ansprüche 1 bis 11, **dadurch gekennzeichnet, daß** sie höhenverstellbar ausgebildet ist.

13. Arbeitsfläche nach Anspruch 12, **dadurch gekennzeichnet, daß** der Wärmetauscher (5) an der höhenverstellbaren Arbeitsfläche angeordnet ist und daß Verbindung (6) zum Kühlaggregat (7) entsprechend flexibel ausgebildet ist.

14. Arbeitsfläche nach einem der vorhergehenden Ansprüche, **dadurch gekennzeichnet, daß** die Arbeitsfläche auf wenigstens einem schlagdämpfenden bzw. stoßdämpfenden Dämpfungsorgan (11) gelagert ist.

15. Arbeitsfläche nach einem der vorhergehenden Ansprüche, **dadurch gekennzeichnet, daß** das Umfeld der gekühlten Fläche (1) unter Verwendung eines lebensmittelverträglichen Materials, vorzugsweise unter Verwendung von Edelstahl, ausgebildet ist.

16. Arbeitsfläche nach einem der Ansprüche 2 bis 15, **dadurch gekennzeichnet, daß** das Kühlwasser (3) mit Ozon oder einem anderen keimfrei machenden Zusatz angereichert ist.

17. Arbeitsfläche nach einem der vorhergehenden Ansprüche, **dadurch gekennzeichnet, daß** die gekühlte Fläche (1) aus einem schnittfesten Kunststoff gefertigt ist.

18. Arbeitsfläche nach einem der vorhergehenden Ansprüche, **dadurch gekennzeichnet, daß** die gekühlte Fläche (1) aus einem lebensmittelverträglichen Metall, vorzugsweise Edelstahl, gefertigt ist.

19. Arbeitsfläche nach einem der vorhergehenden Ansprüche, **dadurch gekennzeichnet, daß** die gekühlte Fläche (1) aus Holz, vorzugsweise Hartholz, gefertigt ist.

20. Arbeitsfläche nach einem der vorhergehenden Ansprüche, **dadurch gekennzeichnet, daß** die gekühlte Fläche (1) aus Keramikmaterial gefertigt ist.

21. Arbeitsfläche nach einem der vorhergehenden Ansprüche, **dadurch gekennzeichnet, daß** die gekühlte Fläche (1) aus einem anderen lebensmittelverträglichen Material gefertigt ist.
